# EUROPEAN PATENT APPLICATION

(11) **EP 2 642 492 A1**
(43) Date of publication of application: **25.09.2013**
(21) Application number: 13275071.2
(22) Date of filing: 19.03.2013
(51) Int. Cl.: H01B 1/22, H01G 4/12

(54) **Conductive fine powder, conductive paste and electronic component**

(30) Priority: 21.03.2012 JP 2012064176
(71) Applicant: Napra Co., Ltd., Katsushika-Ku Tokyo 124-0013 (JP)
(72) Inventor: Sekine, Shigenobu, Tokyo 124-0013 (JP); Sekine, Yurina, Tokyo 124-0013 (JP)
(74) Representative: Potter Clarkson LLP

(57) **Abstract**

A conductive fine powder includes flat metal/alloy fine particles. The flat metal/alloy fine particles have a nanocomposite structure in which crystalline or non-crystalline nanoparticles are mixed or formed in a matrix. The flat metal/alloy fine particles have a maximum thickness of 50 nm or less and a maximum diameter at least twice the thickness and contain a high-melting-point metal and a low-melting-point metal.

## Description

### BACKGROUND OF THE INVENTION

### 1. Field of the Invention

The present invention relates to a conductive fine powder, a conductive paste and an electronic component.

### 2. Description of the Related Art

As disclosed in Japanese Unexamined Patent Application Publication No. 2004-47536, for example, a multilayer electronic component typified by a multilayer ceramic capacitor is manufactured such that after a conductive paste for forming an internal electrode is applied to a ceramic green sheet by screen printing, a required number of the ceramic green sheets are stacked, pressed and then cut into individual components. The individual components are further subjected to a sintering process. Typically, the conductive paste can be obtained by dispersing spherical metallic fine particles such as Ni in an organic vehicle.

The conductive paste containing the spherical metallic fine particles is suitable for use in screen printing. However, a flaw caused by burnout of the organic vehicle in the sintering process cannot be filled up with the metallic fine particles, leaving a space between the metallic fine particles. Such a space, i.e., the presence of electrode breakage results in deterioration of electric characteristics of the electronic component. In such electronic components which are required not only to have a larger capacity but also to be smaller and thinner, particularly, since the internal electrode is also required to be thinner, e.g., 0.3 µ m or less, electrode breakage easily occurs. The big question is how to solve the problem of electrode breakage.

Japanese Unexamined Patent Application Publication No. 2011-91083 discloses a technology in which a conductive thin film produced by a thin-film depositing method is separated from a base material and finely crushed into a conductive fine powder, and a conductive paste for forming an internal electrode is prepared from the conductive fine powder and applied to a ceramic green sheet by gravure printing. The conductive thin film is formed on a release layer by a thin-film depositing method such as vacuum deposition, sputtering or plating.

It also discloses that each flat particle making up the conductive fine powder has an average length of ≥ 1.0 µ m to ≤ 20 µ m, an average thickness of ≥5 nm to ≤100 nm, and an aspect ratio of ≥100. Preferably, the filling factor of the conductive fine powder included in a conductive paste film is ≥50%.

The material of the conductive thin film to be crushed into the conductive fine powder may be nickel, platinum, copper, silver, gold or palladium, or an alloy containing at least one of the above metals, or an oxide, a nitride, a sulfide or a carbide thereof.

The above conductive fine powder is obtained by separating and finely crushing the conductive thin film produced on a base material by a thin-film depositing method. Therefore, even if a single metal, an alloy and a metallic compound coexist in the conductive thin film, they are separated from each other in the conductive fine powder.

### SUMMARY OF THE INVENTION

It is an object of the present invention to provide a conductive fine powder and a conductive paste effective in preventing electrode breakage in a thinned electrode, and an electronic component thereof.

It is another object of the present invention to provide a conductive fine powder and a conductive paste suitable for forming a high-quality electrode having a uniform composition with minimized segregation, and an electronic component thereof.

In order to attain the above object, a conductive fine powder according to the present invention comprises flat metal/alloy fine particles. The flat metal/alloy fine particles have a nanocomposite structure in which crystalline or non-crystalline nanoparticles are mixed or formed in a matrix. The flat metal/alloy fine particles also have a maximum thickness of 50 nm or less and a maximum diameter at least twice the thickness.

The conductive fine powder according to the present invention may be dispersed in an organic vehicle to prepare a conductive paste.

The conductive paste according to the present invention is suitable for forming an electrode, particularly, an internal electrode in an electronic component. The internal electrode is embedded in a ceramic body. In general, the internal electrode comprises a plurality of layers embedded in the ceramic body. A typical example can be found in a multilayer ceramic capacitor.

When producing an electronic component according to the present invention, the conductive paste according to the present invention is applied to at least one side of a support such as a ceramic green sheet by gravure printing and then subjected to a heat treatment.

As described above, the conductive fine powder according to the present invention comprises flat metal/alloy fine particles, and the flat metal/alloy fine particles have a nanocomposite structure in which crystalline or non-crystalline nanoparticles are mixed or formed in a matrix. This suppresses melting-point depression of a metal due to quantum size effect in nano-range, thereby preventing electrode breakage or cracking in a thin layer during its simultaneous sintering process at a ceramic sintering temperature.

Furthermore, when the electrode is formed by using the conductive paste prepared by dispersing the conductive fine powder in an organic vehicle, it becomes a high-quality electrode having a uniform composition with minimized segregation.

The present invention is obviously different from the related art in which a single metal, an alloy and a metallic component are present in a separated state in a conductive fine powder because the flat metal/alloy fine particles according to the present invention have a nanocomposite structure in which crystalline or non-crystalline nanoparticles are mixed or formed in a matrix.

Moreover, since the conductive fine powder comprises flat metal/alloy fine particles, when it is made into a conductive paste and the electrode is printed on a support layer such as a ceramic green sheet, the surface of the flat particles constituting the conductive fine powder can be naturally directed to substantially the same direction as the surface of the support layer by printing pressure. This reduces the thickness of the internal electrode and also increases the filling factor of the conductive fine powder in the internal electrode, which results in maintaining high coverage and preventing electrode breakage during sintering.

Furthermore, the flat metal/alloy fine particles have a maximum thickness of 50 nm or less and a maximum diameter at least twice the thickness. Therefore, even when the thickness of the internal electrode is as small as 0.3 µ m, for example, the internal electrode can be formed by stacking a plurality of the flat metal/alloy fine particles. This is effective in preventing electrode breakage even when the internal electrode has such a small thickness.

Normally, small size effect typified by quantum size effect occurs when the maximum thickness is 50 nm or less, so that if the fine particles are made only of a nanosized metal, the melting point will be reduced to cause melting-point depression that is characteristic of a metal/metallic compound. That is, if the internal electrode is made only of a nanosized metal, the melting-point depression due to small size effect will occur to cause electrode destruction due to a difference in sintering temperature with the ceramic.

In order to solve this problem, the flat metal/alloy fine particles in the present invention have a nanocomposite structure. The nanocomposite structure enables control of its melting temperature, making it possible to form an ultrathin electrode without causing electrode breakage.

When the conductive paste according to the present invention is used for forming an internal electrode of a multilayer electronic component, the conductive paste has to be sintered together with a ceramic green sheet. Since the conductive paste for forming the internal electrode is enclosed within a wall of the ceramic green sheet, a stress generated during sintering of the conductive paste may be directly applied to the wall of the ceramic green sheet to cause fracturing or cracking in the wall of the ceramic green sheet.

To deal with this problem, the conductive paste according to the present invention contains metal/alloy fine particles having a nanocomposite structure. The nanocomposite structure enables temperature control of the metallic electrode during sintering of the ceramic and the conductive paste, suppressing formation of columnar crystal and facilitating formation of equiaxed crystal in the flat metal/alloy fine particles. Therefore, the stress to be applied to the ceramic layer can be relaxed to avoid fracturing or cracking of the ceramic layer.

Since the conductive paste according to the present invention contains flat metal/alloy fine particles, it is suitable for use in gravure printing. However, it should not be construed as excluding the use in screen printing.

The matrix and the nanoparticles constituting the nanocomposite structure may comprise any of a single metal, an alloy, an oxide, a sulfide, a silicide, a carbide and a chloride.

According to the present invention, as described above, the following effects can be obtained.
(a) It is possible to provide a conductive fine powder and a conductive paste effective in preventing electrode breakage in a thinned electrode, and an electronic component thereof.
(b) It is possible to provide a conductive fine powder and a conductive paste suitable for forming a high-quality electrode having a uniform composition with minimized segregation, and an electronic component thereof.

The present invention will be more fully understood from the detailed description given hereinbelow and the accompanying drawings which are given by way of illustration only, and thus not to be considered as limiting the present invention.

### BRIEF DESCRIPTION OF THE DRAWINGS

Fig. 1 is a drawing schematically showing a flat metal/alloy fine particle of a conductive fine powder according to the present invention;
Fig. 2 is a drawing schematically showing a nanocomposite structure of the flat metal/alloy fine particle in Fig. 1;
Fig. 3 is a drawing schematically showing another nanocomposite structure of the flat metal/alloy fine particle in Fig. 1;
Fig. 4 is a drawing schematically showing still another nanocomposite structure of the flat metal/alloy fine particle in Fig. 1;
Fig. 5 is a drawing schematically showing yet another nanocomposite structure of the flat metal/alloy fine particle in Fig. 1;
Fig. 6 is a drawing showing a device for manufacturing metal/alloy fine particles to be processed into the flat metal/alloy fine particles in Figs. 1 to 5;
Fig. 7 is a drawing showing a flattening device to be used in combination with the device shown in Fig. 6;
Fig. 8 is a sectional view showing a multilayer electronic component manufactured by using a conductive fine powder according to the present invention;
Fig. 9 is an enlarged sectional view showing an internal electrode of the multilayer electronic component in Fig. 8;
Fig. 10 is a drawing showing another electronic component manufactured by using a conductive fine powder according to the present invention and
Fig. 11 is a drawing showing a gravure printing process in which a conductive paste according to the present invention is used.

### DESCRIPTION OF THE PREFERRED EMBODIMENTS

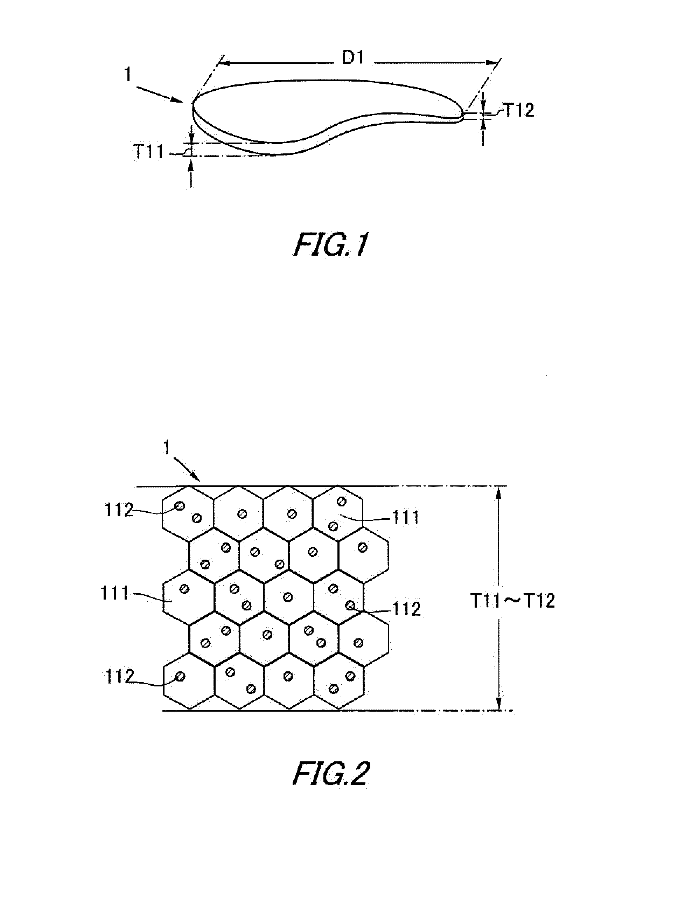

Referring to Fig. 1, a conductive fine powder according to the present invention comprises flat metal/alloy fine particles 1. The flat metal/alloy fine particle 1 has a nanocomposite structure in which crystalline or non-crystalline nanoparticles 112 are mixed or formed in a matrix. The flat metal/alloy fine particle 1 has a maximum thickness T11 of 50 nm or less and a maximum diameter D1 at least twice the thickness. The thickness of the flat metal/alloy fine particle 1 is not required to be constant and may vary between the maximum thickness T11 and a minimum thickness T12.

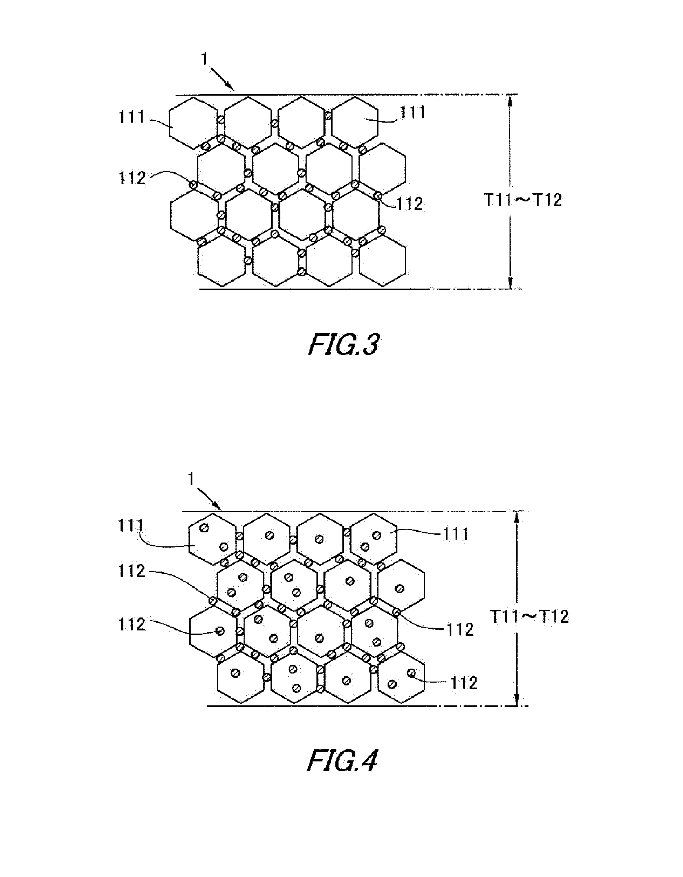

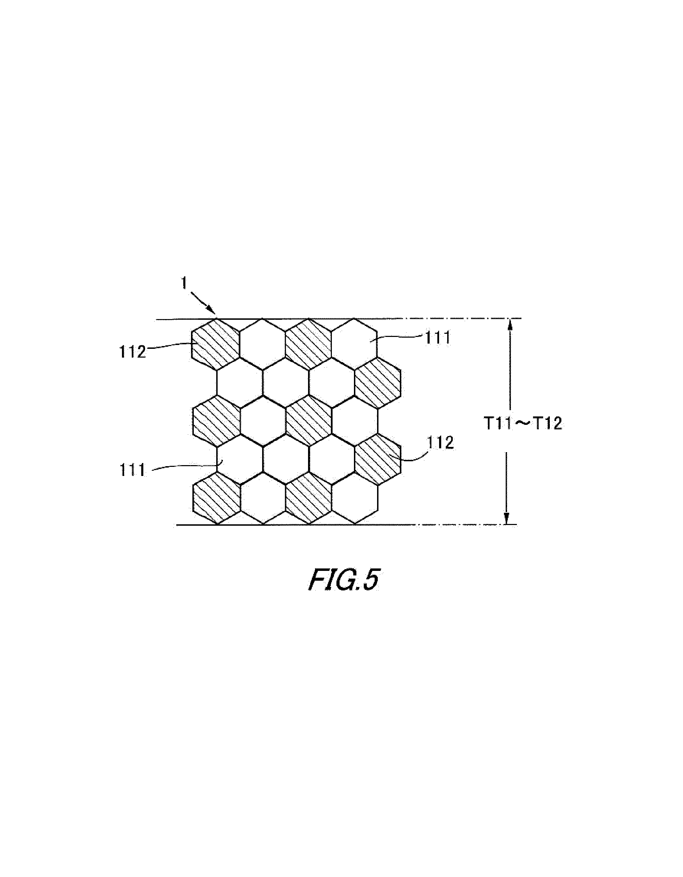

Figs. 2 to 5 are drawings schematically showing a nanocomposite structure. In Fig. 2, nanosized crystalline or non-crystalline nanoparticles 112 are dispersed in crystalline structures 111 of the matrix. In Fig. 3, the nanoparticles 112 are dispersed in grain boundaries between the matrix structures 111. In Fig. 4, the nanoparticles 112 are dispersed in grain boundaries between matrix structures 111 as well as in the matrix structures 111. In Fig. 5, the matrix structures 111 and the nanoparticles 112 are both nanosized. Although not shown in the drawings, the nanocomposite structures shown in Figs. 2 to 5 may be combined with each other. It is also possible to provide another type of nanocomposite structure that is different from the above nanocomposite structures composed of the matrix structures 111 and the nanoparticles 112.

The matrix structures 111 and the nanoparticles 112 constituting the flat metal/alloy fine particles 1 comprises any of a single metal, an alloy and a metallic compound such as an oxide, a sulfide, a silicide, a carbide or a chloride. Specifically, it may contain at least one element selected from the group consisting of Ni, Cr, Ag, Cu, Au, Pt, Pd, Sn, In, Bi, Ga and Sb. Among them, two elements having a relatively high melting point and a relatively low melting point may be chosen and combined with each other as constituent elements of the flat metal/alloy fine particles 1. For instance, Ni may be chosen as a high-melting-point metal, while Sn may be chosen as a low-melting-point metal. The matrix structures 111 and the nanoparticles 112 may, but need not, form a metallic bond together.

In particular, the flat metal/alloy fine particles 1 having the above nanocomposite structure can be obtained by scattering a molten metal in a centrifugal field as droplets, solidifying the droplets by rapid cooling into self-assembled spherical particles (hereinafter referred to as "nanocomposite particles") and deforming the nanocomposite particles. It should be noted that the flat metal/alloy fine particles in the present invention is utterly different from those disclosed in Japanese Unexamined Patent Application Publication No. 2011-91083 because the former is obtained by processing the nanocomposite particles.

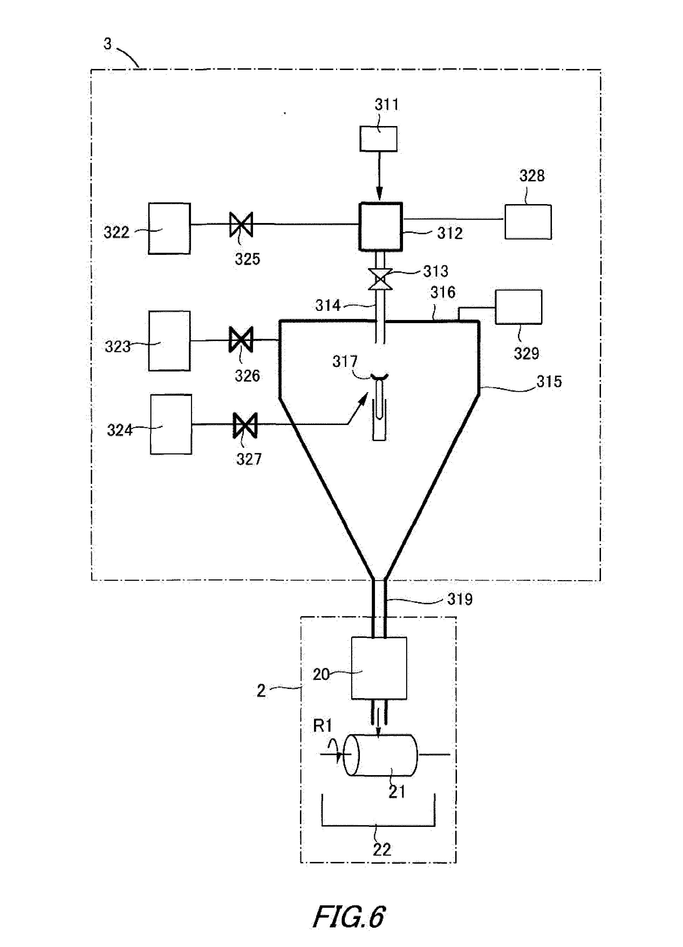

Fig. 6 is a drawing schematically showing a device to be used for manufacturing the flat metal/alloy fine particles in the present invention. However, the flat nanocomposite particles can also be produced by other methods or devices such as stamping without being limited to the device shown in Fig. 6.

Referring to Fig. 6, the device is composed of an upper granulating device 3 and a lower flattening device 2. In the granulating device 3, a granulating chamber 315 has a cylindrical upper part, a conical lower part and a cover 316 at the top. A nozzle 314 passes through the center of the cover 316 substantially vertically and the tip of the nozzle 314 is led to the granulating chamber 315. A dish-shaped rotary disk 317 is disposed beneath the tip of the nozzle 314. An outlet tube 319 for produced particles is connected to a lower end of the conical part of the granulating chamber 315. An electric furnace (high-frequency furnace) 312 and a high-frequency heater 313 for melting a metal to be granulated are connected to the nozzle 314.

The electric furnace 312 receives and melts a raw material supplied from a raw material feeder 311. Atmospheric gases prepared in mixed gas tanks 322, 323, 324 to have a prescribed composition are separately supplied through conduits to the inside of the granulating chamber 315 and to the upper part of the electric furnace 312. The mixed gas tanks 322, 323, 324 can supply different gas components. For instance, they can supply at least one kind of active gas selected from the group consisting of hydrogen, oxygen, silane, methane and hydrogen sulfide, an inert gas such as argon gas or nitrogen gas, or a mixture thereof.

Internal pressures of the granulating chamber 315 and the electric furnace 312 can be controlled by valves 325, 326, 327 and exhausters 328, 329. By keeping the internal pressure of the electric furnace 312 a little higher than the atmospheric pressure and the internal pressure of the granulating chamber 315 a little lower than the atmospheric pressure, the metal melted in the electric furnace 312 can be supplied onto the dish-shaped rotary disk 317 through the nozzle 314 by the differential pressure. The molten metal thus supplied can be scattered as droplets by the action of a centrifugal force generated by the dish-shaped rotary disk 317 and cooled into solid particles. The solid particles thus obtained are supplied to the flattening device 2 through the outlet tube 319.

When supplied onto the rapidly rotating dish-shaped rotary disk 317, the molten metal is subjected to a uniform centrifugal force at the periphery of the dish and separated and scattered as droplets of even size. In the atmospheric gas, the scattered droplets are rapidly cooled, self-assembled and solidified into particles. Subsequently, the fallen particles are collected. Composite particles thus obtained have a particle size less than 1 µ m, e.g., 1 to 300 nm. As schematically shown in Figs. 2 to 5, the composite particles are aggregates having a composite structure in which individual fine particles are separated from each other by scattered materials or voids. It should be noted that the term "self-assembled" means that a homogeneous molten material is automatically assembled into a composite structure in the process of scattering, rapid cooling and solidification.

The diameter of the composite particles decreases with an increase in rotation speed of the dish-shaped rotary disk 317. In order to obtain particles having an average particle size of 200 µ m or less by using a dish-shaped rotary disk 317 having an inner diameter of 35 mm and a depth of 5 mm, the rotation speed is preferably 30,000 rpm or more. The temperature of the atmospheric gas to be supplied to the granulating chamber 315 may be equal to room temperature. In order to ensure rapid cooling of the droplets of the molten material during a long-term continuous operation, however, the quantity of airflow is preferably controlled to make the internal temperature of the granulating chamber 315 equal to or less than 100 °C.

The flattening device 2 includes a plasma reactor 20 and a cooling device 21. In the plasma reactor 20, the composite particles supplied from the granulating device 3 are broken down into nanosized particles by collision reaction with argon ion in a plasma swirling flow and are simultaneously subjected to a plasma reaction crystallization treatment where they are brought into contact with a reactive gas component or vapor component and made into molten nanocomposite particles.

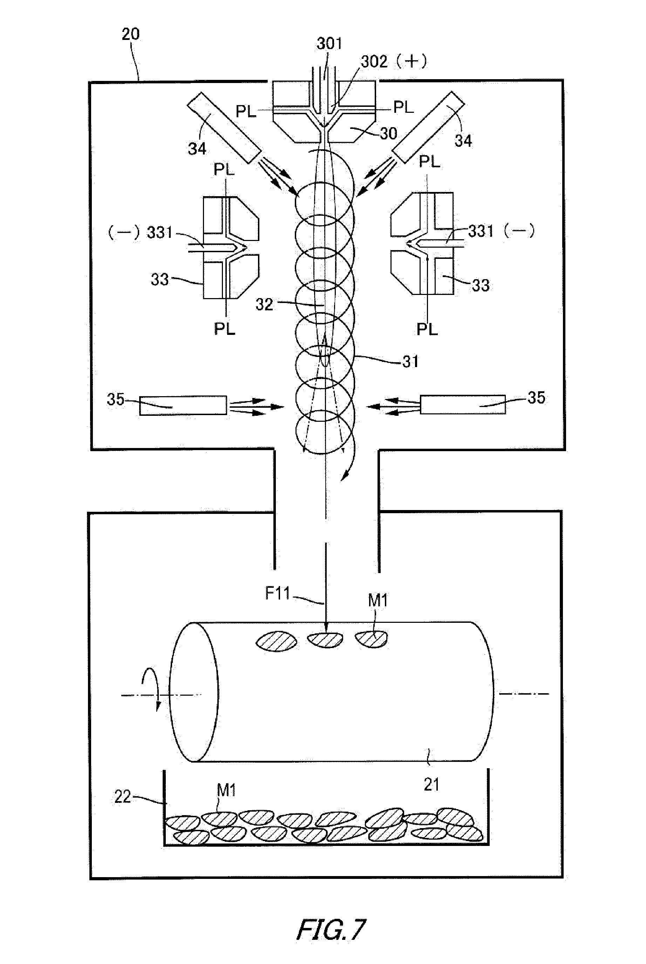

Referring to Fig. 7, the illustrated plasma reactor 20 comprises a primary torch 30, secondary torches 33, reactant gas supply means 34, 35. The primary torch 30 has a plasma gas PL supply means, a fine particle supply means 301 and an anode 302. The secondary torch 33 has a plasma gas PL supply means and a cathode 331. When plasma is generated between the anode 302 of the primary torch 30 and the cathode 331 of the secondary torch 33, the plasma gases PL are emitted along their central axes to intersect with each other. Since the plasma gases PL are conductive, a conductive path is formed from a tip of the secondary torch 33 to a tip of the primary torch 30.

The composite particles supplied to the material supply port 301 from the granulating device 3 are made into molten nanocomposite particles by the plasma reaction crystallization treatment in the plasma reactor 20 and then discharged along the central axis 32. At this time, an inert reactant gas such as argon is emitted from the reactant gas supply means 34 and acts as a protective gas in such as manner as to converge along the central axis 32. The plasma gas PL swirls about the discharge flow along the central axis 32 as a plasma gas flow 31.

Preferably, the reactant gas is used along with a mixture of at least one kind of active gas selected from the group of consisting of hydrogen, oxygen, silane, methane and hydrogen sulfide and an argon gas. In the mixture, preferably, the mixing ratio of each active gas to argon is equal to or less than 30 volume %.

The molten nanocomposite particles thus discharged and sprayed from the plasma reactor 20 in the direction of the arrow F11 are flattened before solidification by supplying them onto a rapidly rotating rotary cylinder 21. The flattened particles are simultaneously scattered as droplets by the action of a centrifugal force due to high-speed rotation and rapidly cooled by contact with the atmospheric gas. Thus, flat nanocomposite particles M1 can be obtained. The flat nanocomposite particles M1 are collected in a container 22.

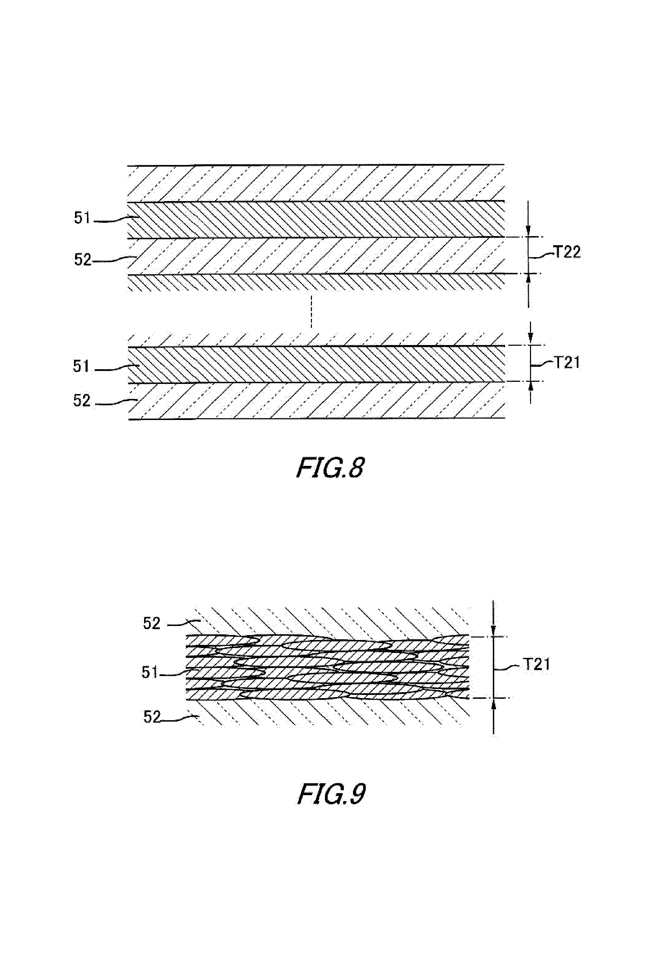

The conductive paste according to the present invention can be used for forming an internal electrode of an electronic component. The electronic component shown in Figs. 8 and 9 is a multilayer ceramic capacitor, in which a plurality of internal electrodes 51 having a small thickness T21 are embedded in a dielectric material, e.g., a BaTiO₃-based ferroelectric material with dielectric layers 52 having a small thickness T22 interposed therebetween. The adjacent internal electrodes 51, 51 are connected to terminal electrodes with opposite polarity.

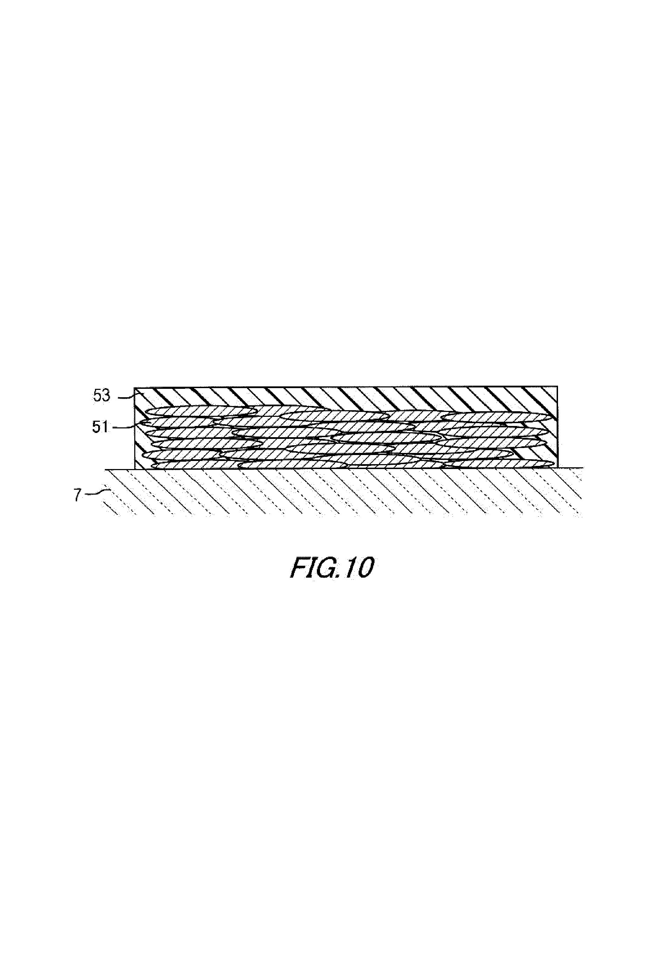

Fig. 10 shows another electronic component. This electronic component is formed such that an electrode 51 covered with an insulating layer 53 is disposed on a support layer 7 such as circuit substrate or semiconductor substrate. This structure has various uses as a trace with an insulated surface. When forming the electrode 51, two elements having a relatively high melting point and a relatively low melting point are chosen from the group consisting of Ni, Cr, Ag, Cu, Au, Pt, Pd, Sn, In, Bi, Ga and Sb, and at least two types of particles: high-melting-point metal/alloy fine particles and low-melting-point metal/alloy fine particles are manufactured using the granulating device shown in Fig. 6.

Then, a conductive paste containing both the high-melting-point metal/alloy fine particles and the low-melting-point metal/alloy fine particles are prepared after at least one type of particles are flattened. Thereafter, the conductive paste is applied onto the support layer 7 and subjected to a heat treatment.

The low-melting-point metal/alloy fine particles are melted by the heat treatment and diffusion bonded to the high-melting-point metal/alloy fine particles. As a result, an insulated metallization trace is formed such that the metallic component settles down to the surface of the support layer 7 to form the electrode 51, while the insulating resin component in the organic vehicle forms the insulating layer 53 covering the electrode 51.

The insulating resin includes at least one component selected from the group consisting of an epoxy insulating resin, an acrylate insulating resin and a phenolic insulating resin. As a solvent for making the conductive paste, it is possible to use well-known organic solvents such as butyl carbitol, butyl carbitol acetate, butyl cellosolve, methyl isobutyl ketone, toluene and xylene.

The technology disclosed in Fig. 10 may be applied to an insulated metallization trace in a liquid crystal display, a personal computer, an automotive navigation system, a mobile phone, a multilayer electronic device, a solar cell, a solar power generation device, a light-emitting diode, a light-emitting device, a lighting apparatus, a signal light, a video game console, a digital camera, a television, a DVD player, an electronic organizer, an electronic dictionary, a hard disk recorder, a personal digital assistant, (PDA), a video camera, a printer, a plasma display or a radio.

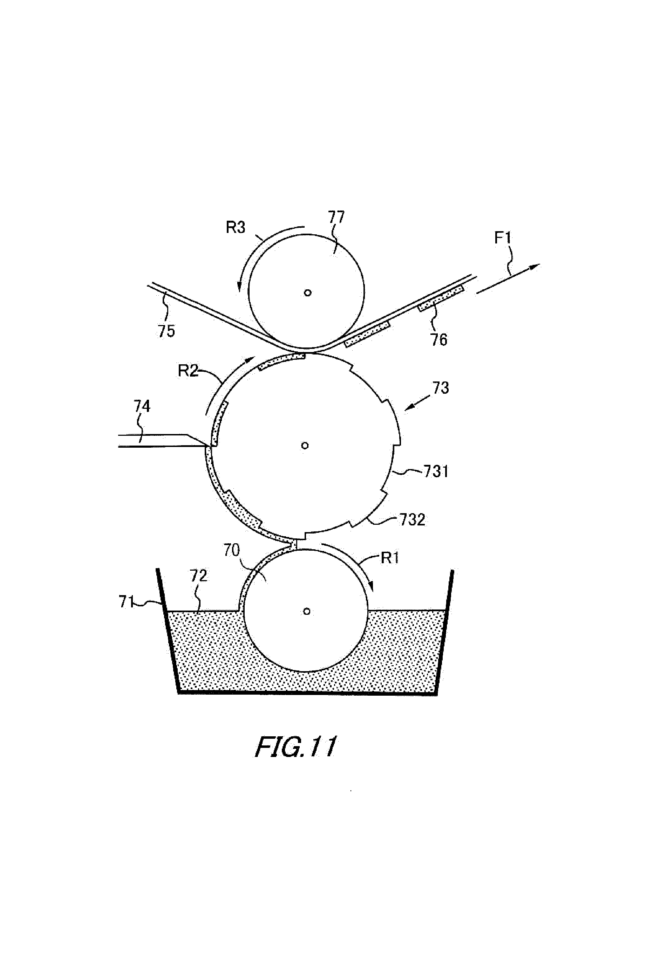

When producing the electronic components shown in Figs. 8 to 10, the conductive paste according to the present invention is applied to at least one side of a ceramic green sheet by gravure printing and then sintered. In the gravure printing, as shown in Fig. 11, a conductive paste 72 put in a tray 71 is adhered to and taken up by the periphery of an ink roller 70 rotating in the direction of the arrow R1, while the conductive paste 72 adhered to the periphery of the ink roller 70 is transferred to the periphery of a printing roller 73 rotating in the direction of the arrow R2. The conductive paste 72 adhered to the periphery of the printing roller 73 is then scraped off, for example, by a doctor blade 74 such that a portion adhered to a protrusion 732 is removed while a portion adhered to a recess 731 is left as it is.

Subsequently, between the printing roller 73 and a pressure roller 77 rotating in the direction of the arrow R3, the conductive paste 72 left in the recess 731 is transferred to a ceramic green sheet 75 being fed in the direction of the arrow F1 coinciding with the rotational directions R2, R3. The pattern of the recess 731 matches an electrode pattern (a set of electrodes). Thus, an electrode pattern 76 is applied to the ceramic green sheet 75.

The ceramic green sheet 75 thus provided with the electrode pattern 76 is subjected to a drying process, a cutting process and a stacking process. Then, a multilayer ceramic capacitor as a finished product is obtained through other well-known manufacturing processes such as a singulation process, a sintering process, a barrel polishing process, a terminal electrode forming process, etc.

As described above with reference to Figs. 1 to 5, the conductive fine powder according to the present invention comprises the flat metal/alloy fine particles 1, and the flat metal/alloy fine particles 1, have a nanocomposite structure in which the nanoparticles 112 are mixed or formed in the matrix 111. Therefore, when the electrode 51 shown in Figs. 8 to 10 is formed by using the conductive paste 72 prepared by dispersing the conductive fine powder in an organic vehicle, it becomes a high-quality electrode 51 free from segregation and having a uniform composition. In this regard, the present invention is different from the related art in which a single metal, an alloy and a metallic component are present in a separated state in a conductive fine powder.

Furthermore, since the conductive fine powder comprises the flat metal/alloy fine particles 1, when the conductive paste 72 is prepared by mixing the conductive fine powder with an organic vehicle and applied as the electrode pattern 76 onto the ceramic green sheet 75 by gravure printing, as shown in Fig. 11, the surface of the flat metal/alloy fine particles 1 constituting the conductive fine powder can be naturally directed to substantially the same direction as the surface of the ceramic green sheet 75 by printing pressure.

In the electronic component shown in Figs. 8 and 9, therefore, it becomes possible to reduce the thickness T21 of the internal electrode 51 and also increase the filling factor of the conductive fine powder in the internal electrode 51, which results in maintaining high coverage and preventing electrode breakage during sintering.

Furthermore, as described above with reference to Fig. thy flat metal/alloy fine particles 1 have a maximum thickness T11 of 50 nm or less and a maximum diameter D1 at least twice the maximum thickness T11. Therefore, even when the thickness T21 of the internal electrode 51 is as small as 0.3 µ m (see Figs. 8 and 9), for example, the internal electrode 51 can be formed by stacking a plurality of the flat metal/alloy fine particles 1 (see Fig. 9). This is effective in preventing electrode breakage even when the internal electrode 51 has such a small thickness.

When the conductive paste 72 according to the present invention is used for forming the internal electrode 51 of the electronic component, the conductive paste 72 has to be sintered together with the ceramic green sheet 75.

Normally, small size effect typified by quantum size effect occurs when the maximum thickness is 50 nm or less, so that if the fine particles are made only of a nanosized metal, the melting point will be reduced to cause melting-point depression that is characteristic of a metal/metallic compound. That is, if the internal electrode 51 is made only of a nanosized metal, the melting-point depression due to small size effect will occur to cause electrode destruction such as electrode breakage in the internal electrode 51 due to a difference in sintering temperature with the ceramic green sheet 75.

In order to solve this problem, the flat metal/alloy fine particles in the present invention have a nanocomposite structure. The nanocomposite structure enables control of its melting temperature, making it possible to form an ultrathin internal electrode 51 without causing electrode breakage. When a low temperature co-fired ceramic (LTCC) is used as the ceramic green sheet 75, for example, the melting temperature can be set such that the material of the internal electrode 51 will never melt at the sintering temperature of LTCC, i.e., around 900 °C.

In the internal electrode, since the conductive paste 72 is enclosed within a wall of the ceramic green sheet 75, a stress generated during sintering of the conductive paste 72 may be directly applied to the wall of the ceramic green sheet 75 to cause fracturing or cracking in the wall of the ceramic green sheet 75.

In the present invention, the conductive paste 72 contains the metal/alloy fine particles 1 having a nanocomposite structure. During sintering of the conductive paste 72, the nanocomposite structure suppresses formation of columnar crystal and facilitates formation of equiaxed crystal in the flat metal/alloy fine particles 1. Therefore, the stress to be applied from the flat metal/alloy fine particles 1 to the ceramic layer can be relaxed to avoid fracturing or cracking of the ceramic layer.

Since the conductive fine powder according to the present invention comprises the flat metal/alloy fine particles 1, it is suitable for use in gravure printing. However, it should not be construed as excluding the use in screen printing.

The flat metal/alloy fine particles 1 and the conductive past 72 according to the present invention can be applied to various uses in electronic components. As described above with reference to Fig. 10, for example, they can be used for forming a flat electrode.

Of course, the application to the internal electrode 51 in a multilayer electronic component typified by a multilayer ceramic capacitor is an important use, but also in this case, they are not limited to the multilayer ceramic capacitor but can be applied to various uses such as a multilayer actuator, a multilayer inductor, a multilayer interposer, a multilayer composite part, etc.

While the present invention has been particularly shown and described with respect to preferred embodiments thereof, it will be understood by those skilled in the art that various changes in form and detail may be made therein without departing from the spirit, scope and teaching of the invention.

## Claims

1. A conductive fine powder comprising flat metal/alloy fine particles (1), the flat metal/alloy fine particles (1) having a nanocomposite structure in which crystalline or non-crystalline nanoparticles are mixed or formed in a matrix (111), the flat metal/alloy fine particles (1) having a maximum thickness (T11) of 50 nm or less and a maximum diameter (D1) at least twice the thickness and containing a high-melting-point metal and a low-melting-point metal.

2. The conductive fine powder claimed in Claim 1, wherein in the nanocomposite structure, the nanoparticles are dispersed in structures of the matrix, or the nanoparticles are dispersed in grain boundaries between structures of the matrix, or the nanoparticles are dispersed in grain boundaries between structures of the matrix as well as in the structures of the matrix.

3. The conductive fine powder claimed in Claim 1, wherein the matrix and the nanoparticles contain any of a single metal, an alloy, an oxide, a sulfide, a silicide, a carbide and a chloride.

4. The conductive fine powder claimed in Claim 3, wherein the matrix and the nanoparticles contain at least one element selected from the group consisting of Ni, Cr, Ag, Cu, Au, Pt, Pd, Sn, In, Bi, Ga and Sb.

5. A conductive paste comprising a conductive fine powder and an organic vehicle, the conductive fine powder being claimed in Claim 1 and dispersed in the organic vehicle.

6. A conductive paste comprising a conductive fine powder and an organic vehicle, the conductive fine powder being claimed in Claim 2 and dispersed in the organic vehicle.

7. An electronic component comprising an electrode, the electrode having a nanocomposite structure including a sintered compact of the conductive fine powder claimed in Claim 1.

8. An electronic component comprising an electrode, the electrode having a nanocomposite structure including a sintered compact of the conductive fine powder claimed in Claim 2.

9. An electronic component comprising an electrode, the electrode having a nanocomposite structure including a sintered compact of the conductive fine powder claimed in Claim 5.

10. An electronic component comprising an electrode, the electrode having a nanocomposite structure including a sintered compact of the conductive fine powder claimed in Claim 6.

11. The electronic component claimed in Claim 7, wherein the electrode comprises a plurality of layers embedded in a ceramic body.

12. The electronic component claimed in Claim 8, wherein the electrode comprises a plurality of layers embedded in a ceramic body.

13. The electronic component claimed in Claim 9, wherein the electrode comprises a plurality of layers embedded in a ceramic body.

14. The electronic component claimed in Claim 10, wherein the electrode comprises a plurality of layers embedded in a ceramic body.

15. A method for producing an electronic component, comprising a step of applying a conductive paste to at least one side of a ceramic green sheet by gravure printing, the conductive paste being claimed in Claim 5.
